**Europäisches Patentamt**

**European Patent Office**

**Office européen des brevets**

(19)

(11) Veröffentlichungsnummer : **0 374 624 B1**

(12)

# EUROPÄISCHE PATENTSCHRIFT

(45) Veröffentlichungstag der Patentschrift :
**14.10.92 Patentblatt 92/42**

(51) Int. Cl.⁵ : **A22C 13/00**

(21) Anmeldenummer : **89122656.5**

(22) Anmeldetag : **08.12.89**

(54) Schlauchförmige Verpackungshüllen mit verbesserter Abschälbarkeit.

(30) Priorität : **21.12.88 DE 3842969**

(43) Veröffentlichungstag der Anmeldung :
**27.06.90 Patentblatt 90/26**

(45) Bekanntmachung des Hinweises auf die
Patenterteilung :
**14.10.92 Patentblatt 92/42**

(84) Benannte Vertragsstaaten :
**BE DE ES FR**

(56) Entgegenhaltungen :
EP-A- 0 006 551
EP-A- 0 088 308
EP-A- 0 249 793
EP-A- 0 286 026
DE-A- 1 952 464
DE-A- 3 447 026

(73) Patentinhaber : **Wolff Walsrode
Aktiengesellschaft
Postfach
W-3030 Walsrode 1 (DE)**

(72) Erfinder : **Stiem, Michael, Dr.
Forstweg 1
W-3031 Eickeloh (DE)**

(74) Vertreter : **Zobel, Manfred, Dr. et al
c/o BAYER AG Konzernverwaltung RP Patente
Konzern
W-5090 Leverkusen 1 Bayerwerk (DE)**

EP 0 374 624 B1

## Beschreibung

Die Erfindung bezieht sich auf schlauchförmige Verpackungshüllen, vorzugsweise Nahrungsmittelhüllen mit verbesserter Abschälbarkeit (Easy-peel).

Schlauchförmige Hüllen, insbesondere aus regenerierter Cellulose, sind als Verpackungsmaterialien für Nahrungsmittel vielfältig im Einsatz und werden in sehr großem Umfang für die Herstellung von verarbeiteten Fleischprodukten, wie Wurstwaren verwendet. Wird die Innenseite solcher Nahrungsmittelhüllen unbehandelt verwendet, so beobachtet man, daß bei der Wurstherstellung das Brät, insbesondere bei Brühwurst, zu stark an der Hülle haften kann. Dies führt während des Schälens zum Herausreißen von Brätresten aus der Wurst und steht der Forderung, kaliberkonstante Wurstscheiben für Stapelaufschnitt zu gewährleisten, entgegen.

Bei der Rohwurstherstellung haftet die Wursthülle nicht fest genug am Brät, infolgedessen kommt es zu teilweisem Ablösen von der Wursthülle, häufig verbunden mit einer unerwünschten Ausbildung eines Ölfilmes und/oder Schimmelbildung auf dem Wurstgut.

Wegen des Ablösens schrumpft auch die Nahrungsmittelhülle nicht mehr mit dem Füllgut, so daß die Wurst faltig und unansehnlich erscheint.

Um diese genannten Nachteile zu beheben, ist es üblich, die Innenseite der Nahrungsmittelschlauchhülle aus regenerierter Cellulose mit einer Beschichtung auf Basis wasserlöslicher Celluloseether, einem partiellen Ester einer Fettsäure mit Sorbitan oder Mannit, einem wasserlöslichen Polyalkylenglykolester oder Mineral oder Silconöl zu versehen, siehe US-A-2 558 042, US-A 2 588 367, US-A 3 158 492, US-A 3 898 348 und US-A 4 137 947. In US-A 2 988 451 wurde Polyvinylpyrrolidon in Verbindung mit CMC erwähnt, in US-A 3 383 223 Glutaraldehyd.

DE-A 34 09 746 beschreibt u.a. die Verwendung von Colophonium, US-A 4 463 778 die Verwendung von Vinylacetatpolymeren. Polyvinylalkohol und mikrokristalline Cellulose in Verbindung mit einem Triglyceridgemisch kommt gemäß EP-A-0 006 551 zur Anwendung. Weiterhin werden erwähnt: Stärke, Chromfettsäurekomplexverbindungen, nicht reaktives Dialkylpolysiloxan sowie Stärkeether in EP-A-0 101 892, DE-A 34 47 026. DE-A-28 41 850.

Diese Innenausrüstungen führen zwar zu einer geringen Haftung, sie weisen jedoch einige Nachteile auf. So tritt vermehrter Öl- und Fettabsatz zwischen Brät und Hülle auf und die Därme neigen zum Abstellen. In den Zwischenräumen kann es bei Rohwurst zu Schimmelbildung kommen. Die Hülle schrumpft nicht mit und wird somit runzlig und unansehnlich. Manche Beschichtungen führen zum Verspröden des Darmes und somit zu Platzern während des Raff- bzw. Füllvorgangs.

Ziel der vorliegenden Erfindung war es daher, eine schlauchförmige Verpackungshülle, vorzugsweise eine schlauchförmige Nahrungsmittelhülle, insbesondere aus regenerierter Cellulose, zur Verfügung zu stellen, die aufgrund ihrer speziellen Innenbeschichtung bei Brühwurst die relativ hohe Haftung zwischen der Wursthülle und den für diesen Hüllentyp vorgesehenen Wurstmassen weitgehend herabsetzt und eine höhere Trennwirkung zeigt, so daß sich die Wursthülle ohne großen Kraftaufwand abziehen läßt. Bei Rohwurst soll sie ein Abstellen während der Reife verhindern und Öl- und Fettabsatz entgegenwirken. Außerdem soll die Innenbeschichtung keine verspödende Wirkung auf das Hüllenmaterial ausüben, damit sich solche Nahrungsmittelhüllen problemlos raffen und zu gefüllten Produkten verarbeiten lassen.

Aus der DE-A 36 20 165 sind zwar bereits schlauchförmige Hüllen insbesondere aus regenerierter Cellulose bekannt, die als Innenbeschichtung ein Eiweißkoagulans enthalten. Diese Beschichtung dient aber nicht der Verbesserung der Abschälbarkeit sondern zur Erhöhung der Haftung zwischen dem Inhalt der Nahrungsmittelhülle und der Hülle selbst.

Gegenstand der Erfindung ist eine schlauchförmige Verpackungshülle mit einem auf ihrer inneren Oberfläche vorhandenen Überzug zur Verbesserung der Abschälbarkeit der Hülle vom Füllgut, wobei der Überzug eine homogene Mischung aus 2 Komponenten enthält, dadurch gekennzeichnet, daß der Überzug als Komponenten ein Eiweißkoagulans A und einen Polyvinylalkohol B enthält.

In einer besonders bevorzugten Ausführungsform enthält die Innenbeschichtung 10 bis 200 mg/m², insbesondere 20 bis 80 mg/m² der Komponenten A + B.

Als Eiweißkoagulans A eignen sich vorzugsweise nichtpolymere, organische, vorzugsweise aliphatische, gegebenenfalls ungesättigte Mono- oder Polycarbonsäuren, die weitere funktionelle Gruppen, vorzugsweise OH-Gruppen, enthalten können, oder deren Salze, vorzugsweise Alkalisalze. Besonders bevorzugte Verbindungen A sind Carbonsäuren mit wenigstens zwei Carboxylgruppen und wenigstens einer Hydroxylgruppe. Ganz besonders bevorzugte Verbindungen A sind Weinsäure, Zitronensäure, Ascorbinsäure, Tetrahydroxyadipinsäure und Sorbinsäure; vorzugsweise Weinsäure oder Zitronensäure.

Bei dem Polyvinylalkohol B handelt es sich vorzugsweise um ein verseiftes Polyvinylacetat, wobei der Verseifungsgrad im allgemeinen wenigstens 70 %, vorzugsweise wenigstens 90 % und insbesondere wenigstens 99 % beträgt.

Die Menge des einzusetzenden Polyvinylalkohols B beträgt im allgemeinen 20 bis 90 Gew.-%, bevorzugt 50 bis 70 Gew.-%, besonders bevorzugt 65 bis 70 Gew.-%, die Menge des Eiweißkoagulans A beträgt im allgemeinen 10 bis 80 Gew.-%, bevorzugt 30 bis 50 Gew.-%, besonders bevorzugt 30 bis 35 Gew.-%, jeweils bezogen auf die beiden erfindungsgemäßen Substanzen.

Überraschenderweise zeigen nun die schlauchförmigen Nahrungsmittelhüllen, die mit der erfindungsgemäßen Innenausrüstung versehen sind, gerade ein so starkes Haftvermögen, daß sie das Schrumpfen während der Reifung der Rohwurst ohne Abzustellen mitmachen, die fertige Rohwurst sich jedoch leicht schälen läßt. Ölseparation wird durch die erfindungsgemäße Innenausrüstung verhindert.

Hüllen dieser Art lassen sich auch bevorzugt im Anwendungsgebiet Stapelaufschnitt verwenden, da sie sich nach Fertigstellung der Wurst leicht abziehen lassen und Gelee- und Fettseparation entgegenwirken.

Das Grundmaterial für den Trägerschlauch ist vorzugsweise regenerierte Cellulose, die auf die übliche Weise als nahtloser Schlauch aus Viskoselösung hergestellt wird. Die Regeneratcellulose ist vorzugsweise mit einem Faservlies verstärkt.

Die Herstellung von schlauchförmigen Verpackungshüllen aus regenerierter Cellulose, die gegebenenfalls faserverstärkt und gegebenenfalls in bekannter Weise außenlackiert sein können, durch Extrusion oder Verspinnen ist allgemein bekannt. Dabei wird der gegebenenfalls faserverstärkte Schlauch in der letzten Stufe seiner Herstellung koaguliert, regeneriert, gewaschen, weichgemacht und anschließend getrocknet. Die erfindungsgemäße Innenausrüstung der schlauchförmigen Hülle kann vorzugsweise während des Herstellungsprozesses der Hülle aus regenerierter Cellulose oder nach deren Trocknung erfolgen. Dabei wird in üblicher Weise eine wäßrige Lösung, vorzugsweise eine 0,5 bis 5 gew.-%ige, insbesondere eine 1 bis 3 gew.-%ige, wäßrige Lösung des Polyvinylalkohols, die außerdem das wasserlösliche Eiweißkoagulans in Mengen von im allgemeinen 0,5 bis 5, vorzugsweise 1 bis 3 Gew.-% enthält, in die Schlauchhülle eingefüllt. Die kontinuierliche Innenbeschichtung der Schlauchhülle wird vorzugsweise nach GB-A- 1 201 830, US-A-2 701 358 oder DE-A-28 01 038 durchgeführt.

Es gibt keine Schwankungen im Haftverhalten zum Brät, was bei einer nicht imprägnierten Hülle durchaus auftreten kann.

Die Innenausrüstung ist auf Cellulosedärme, mit und ohne Faserverstärkung und beliebiger Einfärbung bzw. Pigmentierung, anwendbar. Sie kann ebenfalls bei Kunstdärmen aus anderen Grundmaterialien angewandt werden.

Gegenstand der Erfindung ist schließlich weiterhin die Verwendung der erfindungsgemäßen Verpackungshüllen zum Verpacken von Nahrungsmitteln, insbesondere Wurstbrät.

## Beispiele

Die für die zusätzliche Innenausrüstung vorgesehenen schlauchförmigen Verpackungshüllen waren folgendermaßen hergestellt worden: eine Hanfpapierbahn wurde verfahrensüblich zu einem Schlauch geformt und von einer oder beiden Seiten mit Cellulosexanthogenatlösung beschichtet, regeneriert, weichgemacht und getrocknet.

Die Behandlungslösung wurde entweder vor oder nach der Trocknung auf der inneren Oberfläche aufgebracht.

Die Herstellung der Musterwürste mit Rohwurst- bzw. Brühwurstbrät als Füllgut erfolgte verfahrensüblich. Die Wursthüllen wurden vor dem Füllvorgang bestimmungsgemäß gewässert.

Sämtliche Angaben beziehen sich auf Gew.-% in wäßriger Lösung.

## Beispiel 1

Bei kontinuierlicher Herstellung wurde ein brauner, beidseitig viskosierter Faserdarm, Kal. 60, im nassen Zustand mit 3,5 l wäßriger Beschichtungslösung, enthaltend 1 % Weinsäure und 1 % Polyvinylalkohol (zu 99 % hydrolysiertes Polyvinylacetat) gefüllt, und die innere Oberfläche über einen Abschnitt von 850 m Länge damit ausgerüstet.

Der pH-Wert der Beschichtungslösung betrug 2,6. Resultate:

a) Füllung mit Rohwurstbrät: Die Hülle hatte nach der Reifezeit der Wurst nicht abgestellt, zeigte beim Abschälen lediglich eine geringe Haftung zum Brät und hatte keinerlei Ölabscheidung.

b) Füllung mit Brühwurstbrät: Die Hülle wurde nach einem tag geschält und wies eine mittelstarke Bräthaftung ohne Brätrasen auf. Ein Geleeabsatz konnte nicht festgestellt werden.

## Beispiel 2

Ein naturfarbener, beidseitig viskosierter Faserdarm, Kal. 109, wurde bei kontinuierlicher Herstellung in nassem Zustand mit 5 l einer wäßrigen Beschichtungslösung, enthaltend 1 % Weinsäure, 2 % Polyvinylalkohol (zu 99 % hydrolysiertes Polyvinylacetat) versetzt und die innere Oberläche über einen Abschnitt von 600 m Länge damit ausgerüstet.

Der pH-Wert der Lösung betrug 2,8. Die so behandelten Hüllen wurden mit Brühwurstbrät nach dem üblichen Verfahren gefüllt und am darauffolgenden Tag abgeschält. Die Hülle wies eine schwache Haftung zum Brät auf, hatte keinen Brätrasen und zeigte keinerlei Geleeabsatz.

## Beispiel 3

Ca. 700 m eines einseitig viskosierten naturfarbenen Faserdarms, Kal 65, wurden bei kontinuierlicher Herstellung mit 3 l wäßriger Beschichtungslösung, enthaltend 1 % Weinsäure, 2 % Polyvinylalkohol (zu mindestens 90 % hydrolysiertes Polyvinylacetat), imprägniert.

Der pH-Wert der Lösung betrug 2,3. Mit den so innenausgerüsteten Hüllen wurden nach den üblichen Herstellverfahren Rohwürste angefertigt und nach der reifebedingten Lagerung geschält. Die Hülle hatte vom Füllgut nicht abgestellt und wies beim Schälen eine schwache Haftung zum Brät auf. Brätrasen und Ölabsatz konnte nicht festgestellt werden.

Beispiel 4

Ein beidseitig viskosierter Celluloseregeneratdarm, Kal 100, wurde bei kontinuierlicher Herstellung im nassen Zustand mit 4,5 l wäßriger Beschichtungslösung, enthaltend 1 % Citronensäure, 2 % Polyvinylalkohol (zu 99 % hydrolysiertes Polyvinylacetat) gefüllt und die innere Oberfläche über einen Abschnitt von 500 m Länge damit ausgerüstet.

Die mit der oben angegebenen Mischung innenausgerüsteten Hüllen wurden nach üblicher Arbeitsweise mit Fleischwurstbrät und mit Kochschinken gefüllt und nach der verfahrensbedingten Lagerung geschält.

Resultate:

a) Füllung mit Fleischwurstbrät:
Die Hülle wurde nach einem Tag abgeschält und wies eine mittlere Bräthaftung ohne Brätrasen auf. Geleeabsatz konnte nicht festgestellt werden.
b) Füllung mit Kochschinken:
Die Hülle hatte nach Fertigstellen des Kochschinkens nicht abgestellt, zeigte beim Abschälen eine geringe Haftung zum Brät und keine Verfärbung des Füllgutes.

Beispiel 5

Bei der kontinuierlichen Herstellung wurde ein naturfarbener, beidseitig viskosierter Faserdarm, Kal. 109, im nassen Zustand über einen Abschnitt van ca. 600 m auf der inneren Oberfläche mit einer wäßrigen Lösung, enthaltend 1 % Milchsäure und 2 % Polyvinylalkohol (zu 99 % hydrolysiertes Polyvinylacetat) beschichtet.

Die so behandelten Hüllen wuden mit Brühwurstbrät nach dem üblichen Verfahren gefüllt und am darauffolgenden Tag abgeschält. Sie wiesen eine schwache Haftung zum Brät auf, ohne Brätrasen, und zeigten keinerlei Geleeabsatz.

Beispiel 6

Ein ca. 1 m langer Abschnitt eines naturfarbenen, beidseitig viskosierten Faserdarms, Kal. 105, wurde im trockenen Zustand mit einer wäßrigen Lösung, enthaltend 3 % Weinsäure, 1 % Polyvinylalkohol (zu 99 % hydrolysiertes Polyvinylacetat) auf der Innenseite behandelt. Die so behandelten Hüllen wurden mit Brühwurstbrät nach dem üblichen Verfahren gefüllt und am darauffolgenden Tag abgeschält. Die Hülle wies eine geringe Haftung zum Brät auf und zeigte keinerlei Geleeabsatz.

Beispiel 7

Ein ca. 1 m langer Abschnitt eines naturfarbenen, einseitig viskosierten Faserdarms, Kal. 60, wurde im trockenen Zustand mit einer wäßrigen Lösung, enthaltend 1 % Weinsäure und 5 % Polyvinylalkohol (zu 99 % hydrolysiertes Polyvinylacetat), ausgerüstet.

Mit der so innenausgerüsteten Hülle wurde nach dem üblichen Herstellungsverfahren eine Rohwurst gefertigt und nach der reifebedingten Lagerung abgeschält.

Die Hülle hatte vom Füllgut nicht abgestellt und wies beim Schälen eine geringe Haftung zum Brät auf. Ein Ölabsatz konnte nicht festgestellt werden.

Beispiel 8

Ein naturfarbener, beidseitig viskosierter Faserdarm, Kal. 105, wurde auf der Innenseite eines Abschnittes von ca. 1 m Länge im trockenen Zustand mit der wäßrigen Lösung, enthaltend 1 % Ascorbinsäure und 2 % Polyvinylalkohol (zu 99 % hydrolysiertes Polyvinylacetat), beschichtet.

Die Hüllen wurden mit Brühwurstbrät gefüllt und nach 1 Tag geschält. Beim Abschälvorgang zeigten die Würste eine geringe Haftung zwischen Hülle und Füllgut sowie keinen Geleeabsatz auf dem Wurstzylinder.

In weiteren Versuchen wurde Ascorbinsäure durch Essigsäure bzw. GDL ersetzt. Die Stopfergebnisse mit Brühwurstbrät waren identisch denen mit Ascorbinsäure.

Beispiel 9

Ein ca. 1 m langer Abschnitt des in Beispiel 7 beschriebenen Faserdarmes wurde im trockenen Zustand auf der inneren Oberfläche mit einer wäßrigen Beschichtungslösung, enthaltend 1 % Essigsäure, 3 % Polyvinylalkohol (zu 99 % hydrolysiertes Polyvinylacetat) ausgerüstet.

Mit den so ausgerüsteten Hüllen wurden nach dem üblichen Herstellungsverfahren Rohwürste angefertigt und nach der reifebedingten Lagerung abgeschält.

Die Hülle hatte vom Füllgut nicht abgestellt und wies beim Schälen eine geringe Haftung zum Brät auf. Ein Ölabsatz konnte nicht festgestellt werden.

Mit Ascorbinsäure bzw. Gluconsäure-δ-lacton wurden gleiche Ergebnisse erhalten.

Vergleichsbeispiel 1

Ein ca. 1 m langer Abschnitt des in Beispiel 7 beschriebenen Faserdarms wurde im trockenen Zustand auf der inneren Oberfläche mit einer wäßrigen Beschichtungslösung, enthaltend 6 % Polyvinylalkohol (zu 99 % hydrolysiertes Polyvinylacetat), beschichtet ohne Zugabe eines Eiweißkoagulans.

Mit den so innenausgerüsteten Hüllen wurden nach dem üblichen Herstellungsverfahren Rohwürste angefertigt und nach der reifebedingten Lagerung geschält.

Die Hülle hatte vom Füllgut nicht abgestellt und wies beim Schälen eine sehr schwache Haftung zum Brät auf. Die Wurst war nach dem Schälen über und über mit Öl bedeckt.

Vergleichsbeispiel 2

Ein ca. 1 m langer Abschnitt des in Beispiel 7 beschriebenen Faserdarms wurde auf der Innenseite im trockenen Zustand mit folgender Lösung behandelt die im wesentlichen der Ausrüstung gemäß Beispiel 4 der EP-A 6551 entspricht: 1,26 % Polyvinylalkohol (zu 99 % hydrolysiertes Polyvinylacetat), 1,34 % Polyoxyethylensorbitanmonooleat (statt ethoxylierten Sojaöls), 13,4 % Oliven-öl. Es wurde nach dem üblichen Verfahren eine Rohwurst gefertigt und nach der reifebedingten Lagerung geschält. Die Hülle hatte vom Füllgut nicht abgestellt und wies beim Schälen eine sehr gute Haftung zum Brät auf. Ein Ölabsatz konnte nicht festgestellt werden.

**Patentansprüche**

1. Schlauchförmige Verpackungshülle mit einem auf ihrer inneren Oberfläche vorhandenen Überzug zur Verbesserung der Abschälbarkeit umfassend eine homogene Mischung aus 2 Komponenten, dadurch gekennzeichnet, daß der Überzug als Komponenten ein Eiweißkoagulans A und einen Polyvinylalkohol B enthält.

2. Verpackungshülle nach Anspruch 1, dadurch gekennzeichnet, daß die Innenbeschichtung 10 bis 200 mg/m² der Komponenten A + B enthält.

3. Verpackungshülle nach Anspruch 1, dadurch gekennzeichnet, daß die Innenbeschichtung 20 bis 80 mg/m² der Komponenten A + B enthält.

4. Verpackungshülle nach wenigstens einem der vorhergehenden Ansprüche, dadurch gekennzeichnet, daß als Eiweißkoagulans A wenigstens eine nicht-polymere organische Carbonsäure enthalten ist.

5. Schlauchförmige Verpackungshülle nach wenigstens einem der vorhergehenden Ansprüche, dadurch gekennzeichnet, daß als Eiweißkoagulans A eine Carbonsäure mit wenigstens zwei Carboxylgruppen und wenigstens einer Hydroxygruppe enthalten ist.

6. Schlauchförmige Verpackungshülle nach wenigstens einem der vorhergehenden Ansprüche, dadurch gekennzeichnet, daß der Polyvinylalkohol B ein Polyvinylacetat mit einem Verseifungsgrad von wenigstens 70 % ist.

7. Schlauchförmige Verpackungshülle nach wenigstens einem der vorhergehenden Ansprüche, dadurch gekennzeichnet, daß das Eiweißkoagulans A Weinsäure oder Zitronensäure ist.

8. Verpackungshülle nach wenigstens einem der vorhergehenden Ansprüche, dadurch gekennzeichnet, daß die eingesetzte Menge an Eiweißkoagulans A 10 bis 80 Gew.-% und die des Polyvinylalkohols B 20 bis 90 Gew.-% bezogen auf die Summe beider Substanzen beträgt.

9. Schlauchförmige Verpackungshülle nach wenigstens einem der vorhergehenden Ansprüche, dadurch gekennzeichnet, daß die Hülle eine Nahrungsmittelhülle aus Celluloseregenerat ist.

10. Verwendung einer schlauchförmigen Verpackungshülle gemäß wenigstens einem der vorhergehenden Ansprüche zum Umhüllen von Wurstbrät.

**Claims**

1. A tubular casing comprising a coating on its inner surface for improving peelability containing a homogeneous mixture of two components, characterized in that the coating contains a protein coagulant A and a polyvinyl alcohol B as components.

2. A casing as claimed in claim 1, characterized in that the inner coating contains 10 to 200 mg/m² of components A and B.

3. A casing as claimed in claim 1, characterized in that the inner coating contains 20 to 80 mg/m² of components A and B.

4. A casing as claimed in at least one of the preceding claims, characterized in that at least one non-polymeric organic carboxylic acid is present as the protein coagulant A.

**5.** A tubular casing as claimed in at least one of the preceding claims, characterized in that a carboxylic acid containing at least two carboxyl groups and at least one hydroxy group is present as protein coagulant A.

**6.** A tubular casing as claimed in at least one of the preceding claims, characterized in that the polyvinyl alcohol B is a polyvinyl acetate having a degree of saponification of at least 70%.

**7.** A tubular casing as claimed in at least one of the preceding claims, characterized in that the protein coagulant A is tartaric acid or citric acid.

**8.** A casing as claimed in at least one of the preceding claims, characterized in that the quantity of protein coagulant A used is between 10 and 80% by weight and the quantity of polyvinyl alcohol B used is between 20 and 90% by weight, based on the sum of both substances.

**9.** A casing as claimed in at least one of the preceding claims, characterized in that the casing is a food casing of regenerated cellulose.

**10.** The use of the tubular casing as claimed in at least one of the preceding claims as a sausage casing.

## Revendications

**1.** Enveloppe d'emballage tubulaire présentant sur sa surface interne un revêtement pour faciliter le décollement contenant un mélange homogène de 2 composantes, caractérisée en ce que le revêtement contient comme composantes un agent coagulant protéinique A et un alcool polyvinylique B.

**2.** Enveloppe d'emballage selon la revendication 1, caractérisée en ce que le revêtement interne contient 10 à 200 mg/m² des composantes A + B.

**3.** Enveloppe d'emballage selon la revendication 1, caractérisée en ce que le revêtement interne contient 20 à 80 mg/m² des composantes A + B.

**4.** Enveloppe d'emballage selon au moins une des revendications précédentes, caractérisée en ce qu'au moins un acide carboxylique organique non-polymère est contenu comme agent coagulant protéinique A.

**5.** Enveloppe d'emballage tubulaire selon au moins une des revendications précédentes, caractérisée en ce qu'un acide carboxylique avec au moins deux radicaux carboxyle et au moins un radical hydroxyle est contenu comme agent coagulant protéinique A.

**6.** Enveloppe d'emballage tubulaire selon au moins une des revendications précédentes, caractérisée en ce que l'alcool polyvinylique B est un acétate polyvinylique dont le degré de saponification est d'au moins 70 %.

**7.** Enveloppe d'emballage tubulaire selon au moins une des revendications précédentes, caractérisée en ce que l'agent coagulant protéinique A est l'acide tartrique ou l'acide citrique.

**8.** Enveloppe d'emballage selon au moins une des revendications précédentes, caractérisée en ce que la quantité utilisée d'agent coagulant protéinique A est de 10 à 80 % en poids et celle d'alcool polyvinylique B de 20 à 90 % en poids par rapport à la somme de ces deux substances.

**9.** Enveloppe d'emballage tubulaire selon au moins une des revendications précédentes, caractérisée en ce que l'enveloppe est une enveloppe à usage alimentaire en cellulose régénérée.

**10.** Utilisation d'une enveloppe d'emballage tubulaire selon au moins une des revendications précédentes pour envelopper de la chair à saucisses.